# EUROPEAN PATENT SPECIFICATION

(11) **EP 2 913 879 B1**
(45) Date of publication and mention of the grant of the patent: **19.08.2020**
(21) Application number: 13862280.8
(22) Date of filing: 10.12.2013
(51) Int. Cl.: H01M 10/052, H01M 4/137, H01M 4/60, H01M 4/62, H01M 10/0567, H01M 10/0568, H01M 10/058, H01M 4/36

(54) **NONAQUEOUS ELECTROLYTE SECONDARY BATTERY AND METHOD FOR MANUFACTURING SAME**
SEKUNDÄRBATTERIE MIT NICHTWÄSSRIGEM ELEKTROLYT UND VERFAHREN ZUR HERSTELLUNG DAVON
BATTERIE SECONDAIRE À ÉLECTROLYTE NON AQUEUX ET PROCÉDÉ DE FABRICATION DE CELLE-CI

(30) Priority: 13.12.2012 JP 2012272378
(43) Date of publication of application: 02.09.2015
(73) Proprietor: Nitto Denko Corporation, Ibaraki-shi, Osaka 567-8680 (JP)
(72) Inventor: TAKE Hiroyoshi, Ibaraki-shi Osaka 567-8680 (JP); KAJISA Yuki, Ibaraki-shi Osaka 567-8680 (JP); ABE Masao, Ibaraki-shi Osaka 567-8680 (JP); UETANI Yoshihiro, Ibaraki-shi Osaka 567-8680 (JP)
(74) Representative: Hoffmann Eitle
(86) International application number: PCT/JP2013/083061
(87) International publication number: WO 2014/092071

(56) References cited:
- WO-A1-2011/154692
- JP-A- 2000 082 496
- JP-A- 2004 095 426
- JP-A- 2007 294 374
- JP-A- 2008 218 381
- JP-A- 2008 251 523
- JP-A- 2009 289 757
- JP-A- 2012 074 167
- JP-A- 2012 186 011
- JP-A- 2013 145 712
- US-A1- 2003 180 618
- US-A1- 2009 053 589
- US-A1- 2011 143 216
- SIVAKKUMAR S R ET AL: "Polyterthiophene/CNT composite as a cathode material for lithium batteries employing an ionic liquid electrolyte", ELECTROCHIMICA ACTA, ELSEVIER SCIENCE PUBLISHERS, BARKING, GB, vol. 54, no. 27, 30 November 2009 (2009-11-30), pages 6844-6849, XP026600700, ISSN: 0013-4686, DOI: 10.1016/J.ELECTACTA.2009.06.091 [retrieved on 2009-07-05]

## Description

### TECHNICAL FIELD

The present invention relates to a nonaqueous electrolyte secondary battery and a method for manufacturing the same, and particularly to a nonaqueous electrolyte secondary battery which has an excellent weight energy density and effectively suppresses deterioration of battery performance, and a method for manufacturing the same.

### BACKGROUND ART

With recent improvement and advancement of electronics technology for mobile PCs, mobile phones, personal digital assistants (PDAs), etc., secondary batteries and the like, which can be repeatedly charged and discharged, are widely used as power storage devices for these electronic apparatuses.

Of these secondary batteries, a secondary battery, which includes a positive electrode prepared by using a lithium-containing transition metal oxide, such as lithium manganese oxide or lithium cobalt oxide, as an electrode active material and a negative electrode prepared by using a carbonaceous material capable of lithium ion insertion/desertion, is widely used as a so-called rocking chair-type lithium-ion secondary battery in which a lithium ion concentration in the electrolyte solution does not substantially change during its charging and discharging. In comparison with a so-called reserve type secondary battery, the rocking chair-type lithium-ion secondary battery can be downsized since an amount of the electrolyte solution can be reduced, and the rocking-chair type lithium-ion secondary battery is widely used as a power storage device for the aforementioned electronic apparatuses since it has a high energy density in despite of its small size.

However, this lithium-ion secondary battery, which generates electric energy through an electrochemical reaction, disadvantageously has a lower power density because of its lower electrochemical reaction rate. Further, the lithium-ion secondary battery has higher internal resistance, so that rapid discharge and rapid charge of the secondary battery are difficult. In addition, the secondary battery generally has a shorter service life, i.e., a poorer cycle characteristic, because the electrodes and the electrolyte solution are degraded due to the electrochemical reaction associated with the charge and the discharge.

There is also known a nonaqueous electrolyte secondary battery in which an electrically conductive polymer, such as a polyaniline containing a dopant is used as a positive electrode active material to cope with the aforementioned problem (see PLT 1). In general, however, since the secondary battery employing the electrically conductive polymer as the positive electrode active material is of anion migration type in which the polymer of the positive electrode is doped with an anion in a charge period and dedoped with the anion in a discharge period, the secondary battery cannot constitute the rocking chair-type secondary battery as described above. Accordingly, the nonaqueous electrolyte secondary battery employing the electrically conductive polymer as the positive electrode active material basically requires a large amount of an electrolyte solution, and consequently the nonaqueous electrolyte secondary battery has a problem that it is impossible to contribute to the size reduction of the battery.

In order to solve such a problem, a secondary battery is proposed which is of a cation migration type and substantially free from change in the ion concentration in the electrolyte solution by using an electrically conductive polymer containing a polymer anion such as polyvinyl sulfonate as a dopant in a positive electrode (see PLT 2). Further secondary batteries are described in Patent Documents 3 to 9 and Non-patent Literature 1. However, none of these documents describes a secondary battery comprising the positive electrode material, the negative electrode material and the negative electrode film-forming agent, as specified in the appended claims.

### RELATED ART DOCUMENT

### PATENT DOCUMENTS

PATENT DOCUMENT 1: JP-A-HEI3(1991)-129679
PATENT DOCUMENT 2: JP-A-HEI1(1989)-132052
PATENT DOCUMENT 3: WO 2011/154692 A1
PATENT DOCUMENT 4: JP 2008 218381 A
PATENT DOCUMENT 5: US 2011/143216 A1
PATENT DOCUMENT 6: US 2003/180618 A1
PATENT DOCUMENT 7: US 2009/053589 A1
PATENT DOCUMENT 8: JP 2009 289757 A
PATENT DOCUMENT 9: JP 2000 082496 A

### NON-PATENT LITERATURE

Non-patent Literature 1: SIVAKKUMAR S. R. et al.: "Polyterthiophene/CNT composite as a cathode material for lithium batteries employing an ionic liquid electrolyte", Electrochimica Acta, vol. 54, no. 27, p. 6844-6849.

### SUMMARY OF INVENTION

However, the secondary battery of PLT 2 uses metal, such as lithium, for the negative electrode. In general, in the lithium-ion secondary battery, it is thought to be desired from the viewpoint of safety and cycle characteristics that a carbonaceous material capable of lithium ion insertion/desertion is used for the negative electrode. Since the same holds true with regard to a nonaqueous electrolyte secondary battery in which the electrically conductive polymer is used in the positive electrode, this point is seen as a problem in the secondary battery of PLT 2.

Thus, the present inventors have conducted various studies and experiments concerning the nonaqueous electrolyte secondary battery in which the electrically conductive polymer is used for the positive electrode and the carbonaceous material is used for the negative electrode, and in the process of the studies and experiments, they tried to improve the deterioration of battery performance which is a problem in the nonaqueous electrolyte secondary battery having the aforementioned structure.

The present invention was made in view of such circumstances, and it is an object of the present invention to provide a nonaqueous electrolyte secondary battery using the electrically conductive polymer in the positive electrode and the carbonaceous material in the negative electrode, which has an excellent weight energy density and can effectively suppress deterioration of battery performance, and a method for manufacturing the same.

According to a first aspect of the present invention to achieve the aforementioned object, there is provided a nonaqueous electrolyte secondary battery, which includes a positive electrode, a negative electrode, a separator disposed between the positive electrode and the negative electrode, and an electrolyte solution containing a supporting salt having ionic conductivity, wherein the positive electrode contains an electrically conductive polymer, the electrically conductive polymer being at least one selected from the group consisting of polyaniline, polyaniline derivatives, polypyrrole, and polypyrrole derivatives wherein the negative electrode contains a carbonaceous material capable of lithium ion insertion/desertion, and wherein the electrolyte solution contains a negative electrode film-forming agent.

According to a second aspect of the present invention, there is provided a method for manufacturing the nonaqueous electrolyte secondary battery of the aforementioned first aspect of the present invention, which includes steps (I) to (III) below:
(I) preparing a positive electrode and a negative electrode, and disposing a separator between the positive electrode and the negative electrode to produce a stacked component including the positive electrode, the separator and the negative electrode;
(II) housing at least one of the stacked component in a battery container; and
(III) pouring an electrolyte solution into the battery container.

That is, the polymer positive electrode including an electrically conductive polymer as specified in appended claim 1 has characteristics that it is excellent in a power density, etc., but since the polymer positive electrode exhibits a property of capturing an acid in the electrolyte solution depending on the kind of the electrically conductive polymer, the negative electrode made of a carbonaceous material is eroded by a side reaction due to the acid if the secondary battery is left standing for a long time, resulting in deterioration of battery performance. The present inventors who had made such findings from various experiments conducted earnest investigations in order to solve the deterioration of battery performance in the nonaqueous electrolyte secondary battery having the aforementioned constitution. Consequently, they found that by allowing the electrolyte solution to contain a negative electrode film-forming agent, a stable film is formed on a negative electrode side due to the action of the negative electrode film-forming agent at initial charge/discharge, and therefore a side reaction occurring on the negative electrode side can be effectively suppressed by virtue of the film, and self-discharge in a discharging state can be suppressed to prevent the deterioration of battery performance.

As described above, the nonaqueous electrolyte secondary battery of the present invention includes a positive electrode, a negative electrode, a separator disposed between the positive electrode and the negative electrode, and an electrolyte solution containing a supporting salt having ionic conductivity, wherein the positive electrode contains an electrically conductive polymer as specified in appended claim 1, wherein the negative electrode contains a carbonaceous material capable of lithium ion insertion/desertion, and wherein the electrolyte solution contains a negative electrode film-forming agent. Accordingly, the nonaqueous electrolyte secondary battery of the present invention has an excellent weight energy density and can effectively suppress deterioration of battery performance.

Particularly, when the electrolyte solution contains lithium hexafluorophosphate as a supporting salt, since a film different from the film formed by the negative electrode film-forming agent is further formed on the negative electrode surface in addition to the film formed by the negative electrode film-forming agent, the deterioration of battery performance can be further suppressed.

When the positive electrode further includes nitrogen, since the positive electrode adsorbs an acid produced in the electrolyte solution, the deterioration of battery performance can be further suppressed.

Where the negative electrode film-forming agent in the electrolyte solution is at least one of vinylene carbonate represented by the following formula (1) and fluoroethylene carbonate represented by the following formula (2), the deterioration of battery performance can be more suppressed.

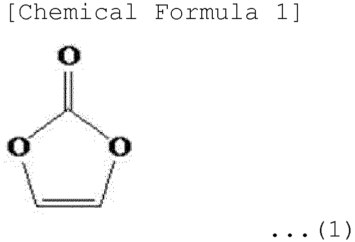

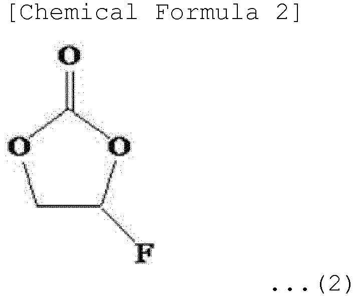

According to the invention, the electrically conductive polymer used for the positive electrode is at least one selected from the group consisting of polyaniline, polyaniline derivatives, polypyrrole and polypyrrole derivatives, which allows that a further improvement of battery performance such as a weight energy density is achieved.

Where the positive electrode further includes the following component (a), a further improvement of battery performance such as a weight energy density is achieved:
(a) at least one of polycarboxylic acid and a metal salt of polycarboxylic acid.

Where the above-mentioned polycarboxylic acid (a) is at least one selected from the group consisting of polyacrylic acid, polymethacrylic acid, polyvinylbenzoic acid, polyallylbenzoic acid, polymethallylbenzoic acid, polymaleic acid, polyfumaric acid, polyasparaginic acid and polyglutamic acid, a further improvement of the weight energy density is achieved.

Moreover, where the metal salt of polycarboxylic acid (a) is at least one of an alkali metal salt of polycarboxylic acid and an alkaline-earth metal salt of polycarboxylic acid, an improvement of the weight energy density is effectively achieved.

Where the method for manufacturing the nonaqueous electrolyte secondary battery includes the following steps (I) to (III), a nonaqueous electrolyte secondary battery is achieved which has an excellent weight energy density and reduced deterioration of battery performance:
(I) preparing a positive electrode and a negative electrode, and disposing a separator between the positive electrode and the negative electrode to produce a stacked component including the positive electrode, the separator and the negative electrode;
(II) housing at least one of the stacked component in a battery container; and
(III) pouring an electrolyte solution into the battery container.

### BRIEF DESCRIPTION OF DRAWINGS

FIG. 1 is a graph showing self-discharge characteristics in which a vertical axis is voltage (V) and a horizontal axis is time (hrs.) in nonaqueous electrolyte secondary batteries of Example 1 and Comparative Example 1.
FIG. 2 is a graph showing self-discharge characteristics in which a vertical axis is voltage (V) and a horizontal axis is time (hrs.) in nonaqueous electrolyte secondary batteries of Example 2 and Comparative Example 2.
FIG. 3 is a graph showing self-discharge characteristics in which a vertical axis is voltage (V) and a horizontal axis is time (hrs.) in nonaqueous electrolyte secondary batteries of Examples 3 to 7 and Comparative Example 3.
FIG. 4 is a graph showing self-discharge characteristics in which a vertical axis is voltage (V) and a horizontal axis is time (hrs.) in nonaqueous electrolyte secondary batteries of Examples 8 to 10 and Comparative Example 3.
FIG. 5 is a graph showing self-discharge characteristics in which a vertical axis is voltage (V) and a horizontal axis is time (hrs.) in nonaqueous electrolyte secondary batteries of Examples 11 to 15 and Comparative Example 4.
FIG. 6 is a graph showing self-discharge characteristics in which a vertical axis is voltage (V) and a horizontal axis is time (hrs.) in nonaqueous electrolyte secondary batteries of Example 16 and Comparative Example 5.

### DESCRIPTION OF EMBODIMENTS

An embodiment of the present invention will hereinafter be described in detail, but the following description is an example of an embodiment of the present invention and the present invention is not limited to the following description.

The nonaqueous electrolyte secondary battery of the present invention includes a positive electrode, a negative electrode, a separator disposed between the positive electrode and the negative electrode, and an electrolyte solution containing a supporting salt having ionic conductivity, wherein the positive electrode contains an electrically conductive polymer as specified in appended claim 1, wherein the negative electrode contains a carbonaceous material capable of lithium ion insertion/desertion, and wherein the electrolyte solution contains a negative electrode film-forming agent. In the present invention, the term "negative electrode film-forming agent" refers to a substance which acts so as to form a film on a surface of the negative electrode at initial charge. Particularly, a substance, which reacts faster than an electrolyte solution solvent commonly used at initial charge and forms a film having an excellent characteristic, is preferably used.

The aforementioned members, materials to be used and the like will hereinafter be successively described.

### <Positive Electrode>

### [Electrically Conductive Polymer]

As described above, the positive electrode of the nonaqueous electrolyte secondary battery of the present invention contains an electrically conductive polymer. The electrically conductive polymer in the present invention has an electrical conductivity variable due to insertion or desertion of ion species with respect to the polymer in order to compensate for change in electric charge to be generated or removed by an oxidation reaction or a reduction reaction occurring in a main chain of the polymer.

The polymer has a higher electrical conductivity in a doped state, and has a lower electrical conductivity in a dedoped state. Even if the electrically conductive polymer loses its electrical conductivity due to the oxidation reaction or the reduction reaction to be thereby electrically insulative (in the dedoped state), the polymer can reversibly have an electrical conductivity again due to the oxidation/reduction reaction. Therefore, in the present invention, the electrically insulative polymer in the dedoped state is also classified into the category of the electrically conductive polymer.

The electrically conductive polymer is at least one selected from the group consisting of polypyrrole, polyaniline, and derivatives thereof. Polyaniline, polyaniline derivatives, polypyrrole and polypyrrole derivatives each having a higher electrochemical capacity are used, and polyaniline and polyaniline derivatives are preferably used.

In the present invention, polyaniline described above refers to a polymer prepared by electrolytic polymerization or chemical oxidation polymerization of aniline, and the polyaniline derivatives refer to polymers prepared, for example, by electrolytic polymerization or chemical oxidation polymerization of aniline derivatives.

Examples of the aniline derivatives include aniline derivatives prepared by substituting aniline at positions other than the 4-position thereof with at least one substituent selected from the group consisting of alkyl groups, alkenyl groups, alkoxy groups, aryl groups, aryloxy groups, alkylaryl groups, arylalkyl groups and alkoxyalkyl groups. Preferred specific examples of the aniline derivatives include o-substituted anilines such as o-methylaniline, o-ethylaniline, o-phenylaniline, o-methoxyaniline and o-ethoxyaniline, and m-substituted anilines such as m-methylaniline, m-ethylaniline, m-methoxyaniline, m-ethoxyaniline and m-phenylaniline, which may be used either alone or in combination. In the present invention, though having a substituent at the 4-position, p-phenylaminoaniline is advantageously used as the aniline derivative because polyaniline can be provided by the oxidation polymerization of p-phenylaminoaniline.

In the present invention, "aniline or the aniline derivative" may be referred to simply as "aniline", and "at least one of the polyaniline and the polyaniline derivative" may be referred to simply as "polyaniline". Accordingly, even if a polymer for the electrically conductive polymer is prepared from an aniline derivative, therefore, the resulting polymer may be referred to as "electrically conductive polyaniline".

The positive electrode according to the nonaqueous electrolyte secondary battery of the present invention preferably further contains nitrogen in addition to the electrically conductive polymer. The meaning of the term "contain nitrogen" herein include not only the case where a nitrogen atom is contained in a molecular structure of the electrically conductive polymer, but also the case of adding a substance serving as a nitrogen source to a material separately. As described above, when the positive electrode material contains nitrogen, the positive electrode material adsorbs an acid produced in the electrolyte solution more effectively. On the other hand, in the positive electrode, it is also preferred to further include at least one of polycarboxylic acid and a metal salt of polycarboxylic acid (a).

### [At Least One of Polycarboxylic Acid and Metal Salt of Polycarboxylic Acid (a)]

In the present invention, the polycarboxylic acid refers to a polymer having a carboxyl group in a molecule. As the polycarboxylic acid, for example, polyacrylic acid, polymethacrylic acid, polyvinylbenzoic acid, polyallylbenzoic acid, polymethallylbenzoic acid, polymaleic acid, polyfumaric acid, polyasparaginic acid and polyglutamic acid are preferably used, among which polyacrylic acid and polymethacrylic acid are more preferred. These polycarboxylic acids may be used either alone or in combination.

The metal salt of polycarboxylic acid refers to, for example, an alkali metal salt or an alkaline-earth metal salt, and these metal salts may be used either alone or in combination. The alkali metal salt is preferably a lithium salt or a sodium salt, and the alkaline-earth metal salt is preferably a magnesium salt or a calcium salt.

### [Outer Shape of Positive Electrode]

The positive electrode according to the nonaqueous electrolyte secondary battery of the present invention comprises a composite made of at least the electrically conductive polymer and the aforementioned component (a), and preferably formed in a porous sheet. In general, the positive electrode preferably has a thickness of 1 to 500 µm, more preferably 10 to 300 µm.

The thickness of the positive electrode is measured by means of a dial gage (manufactured by Ozaki Mfg. Co., Ltd.) which is a flat plate including a distal portion having a diameter of 5 mm. The measurement is performed at ten points on a surface of the electrode, and the measurement values are averaged. Where the positive electrode (porous layer) is provided on a current collector to be combined with the current collector, the thickness of the combined product is measured in the aforementioned manner, and the measurement values are averaged. Then, the thickness of the positive electrode is determined by subtracting the thickness of the current collector from the average thickness of the combined product.

### [Production of Positive Electrode]

The positive electrode according to the nonaqueous electrolyte secondary battery of the present invention is produced, for example, in the following manner. For example, the aforementioned component (a) is dissolved or dispersed in water, and the electrically conductive polymer powder and, as required, a conductive agent such as electrically conductive carbon black are added to and sufficiently dispersed in the resulting solution to prepare a paste having a solution viscosity of about 0.1 to about 50 Pa·s. The paste is applied on a current collector, and then water is evaporated from the paste, whereby a sheet electrode can be produced as a composite product (porous sheet) having a positive electrode active material-containing layer containing the electrically conductive polymer, the component (a), and the conductive agent as required on the current collector.

The conductive agent is desirably an electrically conductive material which has a higher electrical conductivity, and is effective for reducing the electrical resistance between the active materials of the battery and free from change in its properties due to application of a potential in battery discharge. Generally usable examples of the conductive agent include electrically conductive carbon blacks such as acetylene black and Ketjen black, and fibrous carbon materials such as carbon fibers and carbon nanotubes.

In a material for forming the positive electrode according to the nonaqueous electrolyte secondary battery of the present invention, the aforementioned component (a) is generally used in an amount of 1 to 100 parts by weight, preferably 2 to 70 parts by weight, most preferably 5 to 40 parts by weight, based on 100 parts by weight of the electrically conductive polymer. That is, the reason is that if the amount of the component (a) is excessively small with respect to the electrically conductive polymer, it will be impossible to obtain a nonaqueous electrolyte secondary battery having a higher weight energy density, in contrast, if the amount of the component (a) is excessively great, it will be impossible to obtain a nonaqueous electrolyte secondary battery having a higher energy density in considering the entire battery weight by an increase of the positive electrode weight due to an increase of the weight of a member other than the positive electrode active material.

### <Negative Electrode>

The negative electrode according to the nonaqueous electrolyte secondary battery of the present invention is formed of a material containing a carbonaceous material capable of ion insertion/desertion, and a publicly known carbonaceous material which is used as a negative electrode active material of a lithium-ion secondary battery can be used for the negative electrode. Specific examples of the negative electrode active material include calcined product of coke, pitch, phenolic resins, polyimides and cellulose; artificial graphite; and natural graphite. Particularly, artificial graphite and natural graphite are preferred. These carbonaceous materials may be used either alone or in combination.

The aforementioned carbonaceous material is preferably used as a major component of the negative electrode material. The "major component" herein refers to a component that accounts for the majority of the material, and also means that the material may consist of the major component alone.

<Current Collector>

Exemplary materials for the aforementioned current collector include metal foils and meshes such as of nickel, aluminum, stainless steel and copper. The positive electrode current collector and the negative electrode current collector may be formed of the same material or may be formed of different materials.

### <Electrolyte Solution>

The electrolyte solution is formed of a material containing an electrolyte (supporting salt) and a solvent. In the present invention, a negative electrode film-forming agent is contained in the electrolyte solution.

The negative electrode film-forming agent, as described above, refers to a substance which acts so as to form a film on a surface of the negative electrode at initial charge, and particularly, a substance, which reacts faster than an electrolyte solution solvent commonly used at initial charge and forms a film having an excellent characteristic, is preferably used. Specific examples of the substance include vinylene carbonate, fluoroethylene carbonate, 1,3-propanesultone, propylenesulfite, ethylenesulfite, vinylacetate, vinylethylene carbonate, dimethylsulfite, phenylethylene carbonate, phenylvinylene carbonate and fluoro-γ-butyrolactone, which may be used either alone or in combination. Particularly, vinylene carbonate and fluoroethylene carbonate are preferred since they have a higher film-forming property for the negative electrode and therefore can more suppress the deterioration of battery performance.

The content of the negative electrode film-forming agent in the electrolyte solution is preferably 0.1 to 30 parts by weight, more preferably 0.1 to 20 parts by weight based on 100 parts by weight of the electrolyte solution. That is, the reason is that if the content of the negative electrode film-forming agent is less than the aforementioned range, it will be impossible to form an effective film, in contrast, if the content exceeds the above range, since the negative electrode film-forming agent exists over the amount required for forming a negative electrode film in the battery, resulting in the occurrence of a side reaction on an electrode, which can cause a reduction in capacity or generation of a gas.

Preferred examples of an electrolyte preferably used for the electrolyte solution include compounds prepared by combining a metal ion such as a lithium ion with a proper counter ion such as a sulfonate ion, a perchlorate ion, a tetrafluoroborate ion, a hexafluorophosphate ion, a hexafluoroarsenate ion, a bis(trifluoromethanesulfonyl)imide ion, a bis(pentafluoroethanesulfonyl)imide ion or a halide ion. Accordingly, specific examples of the electrolyte include LiCF₃SO₃, LiClO₄, LiBF₄, LiPF₆, LiAsF₆, LiN(SO₂CF₃)₂, LiN(SO₂C₂F₅)₂ and LiCl, which may be used either alone or in combination. Particularly, if the electrolyte solution contains lithium hexafluorophosphate (LiPF₆) as a supporting salt, it is preferred since the deterioration of battery performance can be further suppressed.

Here, lithium hexafluorophosphate is known to be decomposed in the electrolyte solution to produce an acid such as hydrofluoric acid. According to confirmation by the present inventors, the aforementioned hydrofluoric acid which slightly exists in the electrolyte solution forms a film different from the film formed by the negative electrode film-forming agent, and therefore it is thought that since the electrolyte solution contains lithium hexafluorophosphate, electrochemical stability and efficiency of the carbonaceous material serving as a negative electrode is more improved.

Examples of the solvent to be used in the electrolyte solution include nonaqueous solvents, i.e., organic solvents, such as carbonates, nitriles, amides and ethers. Specific examples of the organic solvents include ethylene carbonate, propylene carbonate, butylene carbonate, dimethyl carbonate, diethyl carbonate, ethyl methyl carbonate, acetonitrile, propionitrile, N,N'-dimethylacetamide, N-methyl-2-pyrrolidone, dimethoxyethane, diethoxyethane and γ-butyrolactone, which may be used either alone or in combination.

As the content of the electrolyte in the electrolyte solution, an amount commonly used as an electrolyte content of the nonaqueous electrolyte secondary battery is employed. That is, the electrolyte in the electrolyte solution is generally used in a concentration range of 0.1 to 2.5 mol/L, preferably 0.5 to 1.5 mol/L in the electrolyte solution. If the content of the electrolyte is excessively low, it will be impossible to obtain a nonaqueous electrolyte secondary battery having an excellent weight energy density, whereas, if the content of the electrolyte is excessively high, it will be also impossible to obtain a nonaqueous electrolyte secondary battery having an excellent weight energy density since ion insertion/desertion does not function well.

When a separator is used in the nonaqueous electrolyte secondary battery of the present invention, the separator may be an insulative porous sheet which is capable of preventing an electrical short circuit between the positive electrode and the negative electrode disposed in opposed relation with the separator interposed therebetween; is electrochemically stable; and has a higher ionic permeability and a certain mechanical strength. Therefore, for example, paper, nonwoven fabric and porous films made of a resin such as polypropylene, polyethylene or polyimide are preferably used, and these materials may be used either alone or in combination.

### <Method for Manufacturing Nonaqueous electrolyte Secondary Battery>

A method for manufacturing the nonaqueous electrolyte secondary battery of the present invention using the aforementioned materials includes the following steps (I) to (III). The production method will hereinafter be described in detail.
(I) A step of preparing a positive electrode and a negative electrode, and disposing a separator between the positive electrode and the negative electrode to produce a stacked component including the positive electrode, the separator and the negative electrode.
(II) A step of housing at least one of the stacked component in a battery container.
(III) A step of pouring an electrolyte solution into the battery container.

Specifically, a positive electrode, a separator and a negative electrode are stacked so as to dispose the separator between the positive electrode and the negative electrode to produce a stacked component. Then, the stacked component is put in a battery container such as an aluminum laminate package or the like, and dried in vacuum. Then, an electrolyte solution is poured into the vacuum dried battery container. Finally, the package serving as a battery container is sealed, whereby the nonaqueous electrolyte secondary battery of the present invention is completed.

### <Nonaqueous electrolyte Secondary Battery>

Besides the laminate cell, the nonaqueous electrolyte secondary battery of the present invention may be shaped in various forms such as a film form, a sheet form, a square form, a cylindrical form and a button form.

### EXAMPLES

Inventive examples will hereinafter be described in conjunction with comparative examples. However, the present invention is not limited to these examples without departing from the gist of the invention.

First, the following materials and constituent members were prepared and produced before the production of nonaqueous electrolyte secondary batteries according to the inventive examples and the comparative examples.

### [Preparation of Electrically Conductive Polymer 1]

As the electrically conductive polymer 1, powder of an electrically conductive polyaniline containing tetrafluoroboric acid as a dopant was prepared in the following manner.

That is, first, 84.0 g (0.402 mol) of a tetrafluoroboric acid aqueous solution (special grade reagent manufactured by Wako Pure Chemical Industries, Ltd.) having a concentration of 42 wt% was added to 138 g of ion-exchanged water contained in a 300-mL volume glass beaker. Then, 10.0 g (0.107 mol) of aniline was added to the resulting solution, while the solution was stirred by a magnetic stirrer. Immediately after the addition of aniline to the tetrafluoroboric acid aqueous solution, aniline was dispersed in an oily droplet form in the tetrafluoroboric acid aqueous solution, and then dissolved in water in several minutes to provide a homogeneous transparent aniline aqueous solution. The aniline aqueous solution thus provided was cooled to -4°C or lower with the use of a refrigerant incubator.

Then, 11.63 g (0.134 mol) of a powdery manganese dioxide oxidizing agent (Grade-1 reagent manufactured by Wako Pure Chemical Industries, Ltd.) was added little by little to the aniline aqueous solution, while the mixture in the beaker was kept at a temperature of not higher than -1°C. Immediately after the oxidizing agent was thus added to the aniline aqueous solution, the color of the aniline aqueous solution turned dark green. Thereafter, the solution was continuously stirred, whereby generation of a dark green solid began.

After the oxidizing agent was added in 80 minutes in this manner, the resulting reaction mixture containing the reaction product thus generated was cooled, and further stirred for 100 minutes. Thereafter, the resulting solid was suction-filtered through No. 2 filter paper (manufactured by ADVANTEC Corporation) with the use of a Buchner funnel and a suction bottle to provide powder. The powder was washed in an about 2 mol/L tetrafluoroboric acid aqueous solution with stirring by means of the magnetic stirrer, then washed in acetone several times with stirring, and filtrated under reduced pressure. The resulting powder was dried in vacuum at a room temperature (25°C) for 10 hours. Thus, 12.5 g of an electrically conductive polyaniline (electrically conductive polymer 1) containing tetrafluoroboric acid as a dopant was provided, which was bright green powder.

### (Electrical Conductivity of Electrically Conductive Polymer 1)

After 130 mg of the electrically conductive polyaniline powder was milled in an agate mortar, the resulting powder was compacted into an electrically conductive polyaniline disk having a diameter of 13 mm and a thickness of 720 µm in vacuum at a pressure of 75 MPa for 10 minutes by means of a KBr tablet forming machine for infrared spectrum measurement. The disk had an electrical conductivity of 19.5 S/cm measured by four-point electrical conductivity measurement by the Van der Pauw method.

### (Preparation of Electrically Conductive Polymer 1 in Dedoped State)

The electrically conductive polyaniline powder provided in the doped state in the aforementioned manner was put in a 2 mol/L sodium hydroxide aqueous solution, and stirred in a 3-L separable flask for 30 minutes. Thus, the electrically conductive polyaniline powder doped with the tetrafluoroboric acid dopant was dedoped through a neutralization reaction. The dedoped polyaniline was washed with water until the filtrate became neutral. Then, the dedoped polyaniline was washed in acetone with stirring, and filtered under reduced pressure through No. 2 filter paper with the use of a Buchner funnel and a suction bottle. Thus, dedoped polyaniline powder was provided on the No. 2 filter paper. The resulting powder was dried in vacuum at a room temperature for 10 hours, whereby brown polyaniline powder in the dedoped state was provided.

### (Preparation of Electrically Conductive Polymer 1 in Reduced-Dedoped State)

Next, the polyaniline powder in the dedoped state was put in an aqueous solution of phenylhydrazine in methanol, and reduced for 30 minutes with stirring. Due to the reduction, the color of the polyaniline powder turned from brown to gray. After the reaction, the resulting polyaniline powder was washed with methanol and then with acetone, filtered, and dried in vacuum at a room temperature. Thus, polyaniline in a reduced-dedoped state was provided.

### (Electrical Conductivity of Electrically Conductive Polymer 1 in Reduced-Dedoped State)

After 130 mg of the polyaniline powder in the reduced-dedoped state was milled in an agate mortar, the resulting powder was compacted into a polyaniline disk in a reduced-dedoped state having a thickness of 720 µm in vacuum at a pressure of 75 MPa for 10 minutes by means of a KBr tablet forming machine for infrared spectrum measurement. The disk had an electrical conductivity of 5.8 × 10⁻³ S/cm measured by four-point electrical conductivity measurement by the Van der Pauw method. This means that the polyaniline compound was an active material compound having an electrical conductivity variable due to ion insertion/desertion.

### [Preparation of Electrically Conductive Polymer 2]

Powder of an electrically conductive polypyrrole containing anthraquinone-2-sulfonic acid as a dopant was prepared as an electrically conductive polymer in the following manner.

That is, first, 25 g (0.373 mol) of pyrrole was dissolved in 430 g of ion-exchanged water with stirring to produce a 5.5 wt% aqueous solution. In this solution, 30.5 g (0.093 mol) of sodium anthraquinone-2-sulfonate monohydrate was dissolved. Further to the resulting solution, 243 g of a 35 wt% ammonium peroxodisulfate aqueous solution was added dropwise little by little at a room temperature in 2 hours. The resulting mixture was filtrated under reduced pressure with the use of a Buchner funnel and a suction bottle to provide black polypyrrole powder. The black polypyrrole powder was washed with water and then with acetone, and dried in vacuum at a room temperature for 10 hours in a desiccator to provide 25.5 g of powdery electrically conductive polypyrrole (electrically conductive polymer 2).

### (Electrical Conductivity of Electrically Conductive Polymer 2)

After 130 mg of the electrically conductive polypyrrole powder was milled in an agate mortar, the resulting powder was compacted into an electrically conductive polypyrrole disk having a diameter of 13 mm and a thickness of 700 µm in vacuum at a pressure of 75 MPa for 10 minutes by means of a KBr tablet forming machine for infrared spectrum measurement. The disk had an electrical conductivity of 10 S/cm as measured by Van der Po's quad-terminal electrical conductivity measurement method.

### [Preparation of At Least One of Polycarboxylic Acid and Metal Salt of Polycarboxylic Acid (a)]

To 95.6 g of ion-exchanged water, 4.4 g of polyacrylic acid (manufactured by Wako Pure Chemical Industries, Ltd., and having a weight average molecular weight of 1,000,000) was added, and the resulting mixture was left on overnight to be swelled. Thereafter, the swollen mixture was ultrasonically treated for 1 minute by means of an ultrasonic homogenizer to be dissolved, whereby 100 g of a viscous polyacrylic acid aqueous solution having a concentration of 4.4 wt% was provided. Then, 0.73 g of lithium hydroxide powder, which is equivalent to an amount required for converting half of carboxyl group portions of polyacrylic acid to lithium salt, was added to 100 g of the resulting polyacrylic acid aqueous solution to prepare an aqueous solution of semi-lithium salt of polyacrylic acid.

### [Production of Positive Electrode I]

A binder solution was prepared by mixing 0.37 g of a styrene-butadiene copolymer (SBR) emulsion (TRD2001 manufactured by JSR Corporation) having a concentration of 48 wt% with 2.12 g of a polyvinyl pyrrolidone (PVP) aqueous solution (K-90W manufactured by NIPPON SHOKUBAI CO., LTD.) having a concentration of 19.8 wt%.

After 4 g of the electrically conductive polymer 1 powder in the reduced-dedoped state and 0.6 g of electrically conductive carbon black (DENKA BLACK manufactured by Denki Kagaku Kogyo K.K.) powder were mixed, the resulting mixture was added to the aforementioned binder solution, 6.9 g of ion-exchanged water was further added thereto, and the resulting mixture was adequately kneaded by a spatula. The kneaded mixture was ultrasonically treated for 1 minute by an ultrasonic homogenizer, and then the mixture was subjected to mild dispersion by applying a high shear force with the use of a thin-film spin system high-speed mixer (FILMIX MODEL 40-40 manufactured by Primix Corporation) to provide a fluid paste. The paste was defoamed by means of a vacuum suction bell jar and a rotary pump.

The defoamed paste was applied at a coating rate of 10 mm/sec onto an etched aluminum foil for an electric double layer capacitor (30CB manufactured by Hohsen Corporation) with the use of a desktop automatic coater (manufactured by Tester Sangyo Co., Ltd.) while the coating thickness was adjusted to 360 µm by a doctor blade applicator equipped with a micrometer. Then, the resulting coating was left standing at a room temperature (25°C) for 45 minutes, and dried on a hot plate at a temperature of 100°C. Thereafter, the coated aluminum foil was sandwiched between stainless steel plates 15 cm square and pressed at 140°C and at a pressure of 1.5 MPa for 5 minutes by means of a vacuum press machine (KVHC manufactured by KITAGAWA SEIKI CO.,LTD) to produce a porous polyaniline sheet electrode (positive electrode I).

### [Production of Positive Electrode II]

A binder solution was prepared by mixing 0.42 g of a styrene-butadiene copolymer (SBR) emulsion (TRD2001 manufactured by JSR Corporation) having a concentration of 48 wt% with 2.45 g of a polyvinyl pyrrolidone (PVP) aqueous solution (K-90W manufactured by NIPPON SHOKUBAI CO., LTD.) having a concentration of 19.8 wt%.

After 3 g of the prepared electrically conductive polymer 2 powder and 0.365 g of electrically conductive carbon black (DENKA BLACK manufactured by Denki Kagaku Kogyo K.K.) powder were mixed, the resulting mixture was added to the aforementioned binder solution, 5 g of ion-exchanged water was further added thereto, and the resulting mixture was adequately kneaded by a spatula. The kneaded mixture was ultrasonically treated for 1 minute by an ultrasonic homogenizer, and then the mixture was subjected to mild dispersion by applying a high shear force with the use of a thin-film spin system high-speed mixer (FILMIX MODEL 40-40 manufactured by Primix Corporation) to provide a fluid paste. The paste was defoamed by means of a vacuum suction bell jar and a rotary pump.

The defoamed paste was applied at a coating rate of 10 mm/sec onto an etched aluminum foil for an electric double layer capacitor (30CB manufactured by Hohsen Corporation) with the use of a desktop automatic coater (manufactured by Tester Sangyo Co., Ltd.) while the coating thickness was adjusted to 360 µm by a doctor blade applicator equipped with a micrometer. Then, the resulting coating was left standing at a room temperature (25°C) for 45 minutes, and dried on a hot plate at a temperature of 100°C to produce a porous polypyrrole sheet electrode (positive electrode II).

### [Production of Positive Electrode III]

After 4 g of the prepared electrically conductive polymer 1 powder in the reduced-dedoped state and 0.5 g of electrically conductive carbon black (DENKA BLACK manufactured by Denki Kagaku Kogyo K.K.) powder were mixed, the resulting mixture was added to 20.4 g of the aforementioned aqueous solution of semi-lithium salt of polyacrylic acid having a concentration of 4.4 wt%, and the resulting mixture was adequately kneaded by a spatula. The kneaded mixture was ultrasonically treated for 1 minute by an ultrasonic homogenizer, and then the mixture was subjected to mild dispersion by applying a high shear force with the use of a thin-film spin system high-speed mixer (FILMIX MODEL 40-40 manufactured by Primix Corporation) to provide a fluid paste. The paste was defoamed by means of a vacuum suction bell jar and a rotary pump.

The defoamed paste was applied at a coating rate of 10 mm/sec onto an etched aluminum foil for an electric double layer capacitor (30CB manufactured by Hohsen Corporation) with the use of a desktop automatic coater (manufactured by Tester Sangyo Co., Ltd.) while the coating thickness was adjusted to 360 µm by a doctor blade applicator equipped with a micrometer. Then, the resulting coating was left standing at a room temperature (25°C) for 45 minutes, and dried on a hot plate at a temperature of 100°C. Thereafter, the coated aluminum foil was sandwiched between stainless steel plates 15 cm square and pressed at 140°C and at a pressure of 1.5 MPa for 5 minutes by means of a vacuum press machine (KVHC manufactured by KITAGAWA SEIKI CO.,LTD) to produce a porous polyaniline sheet electrode (positive electrode III).

### [Preparation of Separator]

A polypropylene porous membrane (CELGARD 2400 manufactured by Celgard Co., Ltd.) having a thickness of 25 µm, a porosity of 38% and an air permeability of 620 sec/100cm³ was used as the separator.

### [Preparation of Negative Electrode]

As the negative electrode containing a carbonaceous material, a negative electrode sheet (manufactured by Piotrek Co., Ltd., 0.8 mAh/cm²) containing natural spherical graphite as an active material was used.

### [Preparation of Electrolyte Solution (i)]

A solution, which was formed by dissolving lithium hexafluorophosphate (LiPF₆) in a concentration of 1 mol/L in a solvent containing ethylene carbonate and dimethyl carbonate at a volume ratio of 1 : 1, was prepared as an electrolyte solution (i).

### [Preparation of Electrolyte Solution (ii)]

A solution, which was formed by dissolving lithium hexafluorophosphate (LiPF₆) in a concentration of 1 mol/L in a solvent containing ethylene carbonate and diethyl carbonate at a volume ratio of 3 : 7, was prepared as an electrolyte solution (ii).

### [Preparation of Electrolyte Solution (iii)]

A solution, which was formed by dissolving lithium tetrafluoroborate (LiBF₄) in a concentration of 1 mol/L in a solvent containing ethylene carbonate and dimethyl carbonate at a volume ratio of 1 : 1, was prepared as an electrolyte solution (iii).

### [Preparation of Additive for Electrolyte Solution (Negative Electrode Film-Forming Agent)]

As an additive for an electrolyte solution, vinylene carbonate (VC) and fluoroethylene carbonate (FEC) were prepared.

### [Example 1]

### <Production of Laminate Cell>

A stacked component was assembled using the positive electrode I, the negative electrode and the separator. Specifically, the positive electrode I, the separator and the negative electrode were stacked so as to dispose two sheets of the separators between the positive electrode I and the negative electrode to provide a stacked component. The stacked component was put in an aluminum laminate package, and dried in vacuum at 80°C for 2 hours in a vacuum dryer. Then, an electrolyte solution was poured into the vacuum dried package. As this electrolyte solution, a solution, which was obtained by adding 2 parts by weight of vinylene carbonate (VC) as the additive for an electrolyte solution to 100 parts by weight of the electrolyte solution i prepared above, was used. Finally, the package was sealed, whereby a nonaqueous electrolyte solution secondary battery of Example 1 was provided. The electrolyte solution was poured into the package in a glove box in an ultrapure argon gas atmosphere. The dew point of the atmosphere in the glove box was -90°C or lower. In this manner, a laminate cell (nonaqueous electrolyte secondary battery) was provided.

### [Examples 2 to 16, Comparative Examples 1 to 5]

The kinds of the positive electrode, the electrolyte solution and the additive for an electrolyte solution, as well as the additive amount of the additive for an electrolyte solution (a negative electrode film-forming agent) were changed to those shown in Tables 1 to 5. Laminate cells (nonaqueous electrolyte secondary batteries) were produced in the same manner as in Example 1 except for the aforementioned conditions.

A weight energy density was measured in accordance with the following criterion on each of the nonaqueous electrolyte secondary batteries of the inventive examples and the comparative examples thus obtained. The results of the measurement are shown together in Tables 1 to 5.

### <<Measurement of Weight Energy Density>>

The nonaqueous electrolyte secondary batteries are each allowed to stand still in a thermostat chamber kept at 25°C. By means of a battery charge/discharge device (SD8 manufactured by Hokuto Denko Corporation), measurement is performed in a constant current and constant voltage charge/constant current discharge mode. A charge process was performed at a constant current corresponding 0.05C until the voltage reached 3.8 V, and after the voltage reached 3.8 V, the charge process was performed at a constant voltage of 3.8 V until the current value decayed to 20% of a current value corresponding 0.05C. This charge process was defined as one charge process. Then, a discharge process was performed at a current value corresponding 0.05C until the voltage reached 2.0 V, and these processes were collectively defined as one charge/discharge cycle.

Herein, 0.05C indicates a 20 hour rate, and the term "20 hour rate" means a current value at which it takes 20 hours to charge or discharge a battery. The weight energy density relative to a net weight of the polyaniline is measured from a discharge capacity at the second cycle.

**[Table 1]**

| | Kind of Positive Electrode | Electrolyte Solution | | Weight Energy Density [Wh/kg] |
|---|---|---|---|---|
| | | Kind of Solution | Additive [additive amount] | |
| Example 1 | I | i | VC [2 parts by weight] | 100 |
| Comparative Example 1 | I | i | none | 100 |

**[Table 2]**

| | Kind of Positive Electrode | Electrolyte Solution | | Weight Energy Density [Wh/kg] |
|---|---|---|---|---|
| | | Kind of Solution | Additive [additive amount] | |
| Example 2 | II | i | VC [2 parts by weight] | 96 |
| Comparative Example 2 | II | i | none | 97 |

**[Table 3]**

| | Kind of Positive Electrode | Electrolyte Solution | | Weight Energy Density [Wh/kg] |
|---|---|---|---|---|
| | | Kind of Solution | Additive [additive amount] | |
| Example 3 | III | i | VC [0.5 parts by weight] | 237 |
| Example 4 | III | i | VC [1 part by weight] | 226 |
| Example 5 | III | i | VC [2 parts by weight] | 241 |
| Example 6 | III | i | VC [5 parts by weight] | 204 |
| Example 7 | III | i | VC [10 parts by weight] | 228 |
| Example 8 | III | i | FEC [1 part by weight] | 226 |
| Example 9 | III | i | FEC [5 parts by weight] | 226 |
| Example 10 | III | i | FEC [10 parts by weight] | 193 |
| Comparative Example 3 | III | i | none | 207 |

**[Table 4]**

| | Kind of Positive Electrode | Electrolyte Solution | | Weight Energy Density [Wh/kg] |
|---|---|---|---|---|
| | | Kind of Solution | Additive [additive amount] | |
| Example 11 | III | ii | VC [0.5 parts by weight] | 196 |
| Example 12 | III | ii | VC [1 part by weight] | 207 |
| Example 13 | III | ii | VC [2 parts by weight] | 204 |
| Example 14 | III | ii | VC [5 parts by weight] | 191 |
| Example 15 | III | ii | VC [10 parts by weight] | 171 |
| Comparative Example 4 | III | ii | none | 192 |

**[Table 5]**

| | Kind of Positive Electrode | Electrolyte Solution | | Weight Energy Density [Wh/kg] |
|---|---|---|---|---|
| | | Kind of Solution | Additive [additive amount] | |
| Example 16 | III | iii | VC [1 part by weight] | 187 |
| Comparative Example 5 | III | iii | none | 128 |

From a comparison between the inventive examples and the comparative examples in the above tables, the nonaqueous electrolyte secondary batteries of the inventive examples each using the electrolyte solution containing the negative electrode film-forming agent exhibit a high weight energy density which is nearly equal to or higher than the nonaqueous electrolyte secondary batteries of the comparative examples each using the electrolyte solution not containing the negative electrode film-forming agent.

### <<Measurement of Self-Discharging Characteristics>>

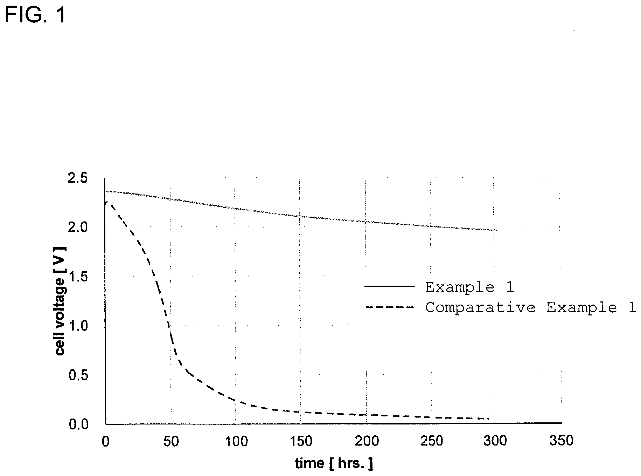

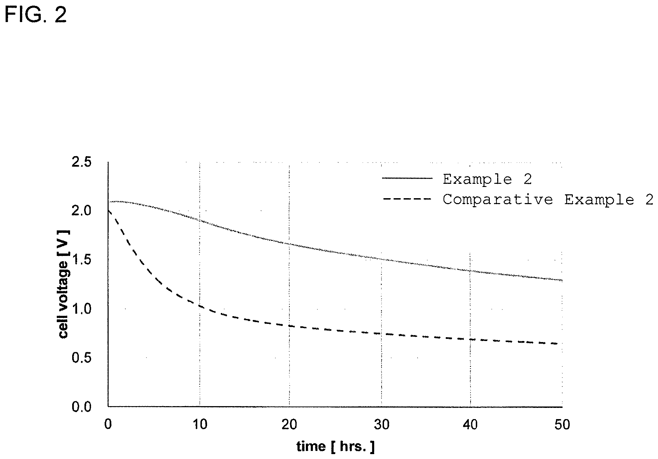

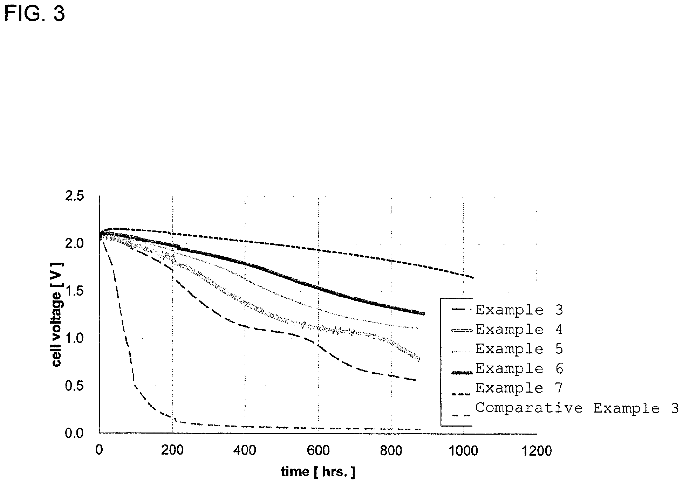

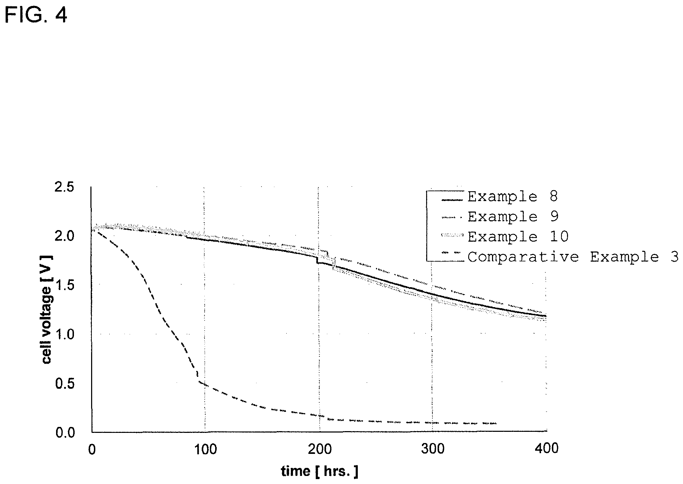

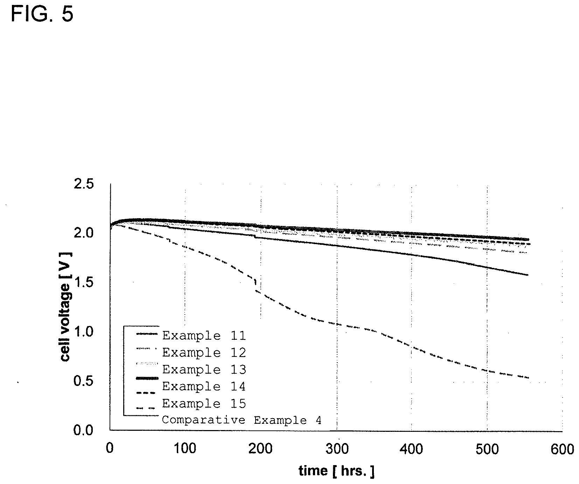

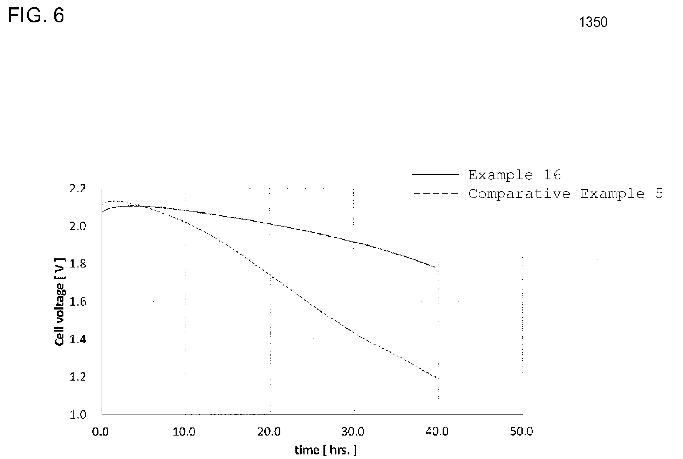

In the nonaqueous electrolyte secondary battery, the charge/discharge cycle was performed two times in the manner described above, and then a change in voltage (V) was measured every 1 hour in an open circuit voltage measurement mode by means of a battery charge/discharge device (SD8 manufactured by Hokuto Denko Corporation). The results of measurement are shown in graphs of FIGS. 1 to 6.

As is apparent from a comparison between the inventive examples and the comparative examples in the aforementioned graphs, while the nonaqueous electrolyte secondary batteries of the inventive examples have a low proportion of the self-discharge over time (a curve of a graph changes gently), the nonaqueous electrolyte secondary batteries of the comparative examples have a high proportion of the self-discharge over time (a curve of a graph declines rapidly).

Thus, summarizing the results of the aforementioned tables and graphs, the nonaqueous electrolyte secondary batteries each using the electrolyte solution containing the negative electrode film-forming agent have a high weight energy density which is nearly equal to or higher than the nonaqueous electrolyte secondary batteries each using the electrolyte solution not containing the negative electrode film-forming agent, and can suppress self-discharge higher than the nonaqueous electrolyte secondary batteries each using the electrolyte solution not containing the negative electrode film-forming agent, and therefore the nonaqueous electrolyte secondary batteries each using the electrolyte solution containing the negative electrode film-forming agent have high battery performance.

While specific forms of the embodiment of the present invention have been shown in the aforementioned inventive examples, the inventive examples are merely illustrative of the invention but not limitative of the invention. It is contemplated that various modifications apparent to those skilled in the art could be made within the scope of the invention as defined in the appended claims.

The nonaqueous electrolyte secondary battery of the present invention can be advantageously used as a nonaqueous electrolyte secondary battery such as a lithium-ion secondary battery. The nonaqueous electrolyte secondary battery of the present invention can be used for the same applications as the conventional secondary batteries, for example, for mobile electronic apparatuses such as mobile PCs, mobile phones and personal data assistants (PDAs), and for driving power sources for hybrid electric cars, electric cars and fuel battery cars.

## Claims

1. A nonaqueous electrolyte secondary battery comprising:
a positive electrode;
a negative electrode, wherein the negative electrode contains a carbonaceous material capable of lithium ion insertion/desertion;
a separator disposed between the positive electrode and the negative electrode; and
an electrolyte solution containing a supporting salt having ionic conductivity,
**characterized in that** the positive electrode contains an electrically conductive polymer, the electrically conductive polymer being at least one selected from the group consisting of polyaniline, polyaniline derivatives, polypyrrole, and polypyrrole derivatives and
the electrolyte solution contains a negative electrode film-forming agent.

2. The nonaqueous electrolyte secondary battery according to claim 1, wherein the electrolyte solution contains lithium hexafluorophosphate as a supporting salt.

3. The nonaqueous electrolyte secondary battery according to claim 1 or 2, wherein the positive electrode further contains nitrogen.

4. The nonaqueous electrolyte secondary battery according to any one of claims 1 to 3, wherein the negative electrode film-forming agent in the electrolyte solution is at least one of vinylene carbonate represented by formula (1) below and fluoroethylene carbonate represented by formula (2) below:

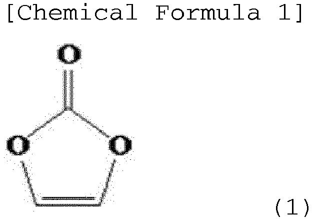

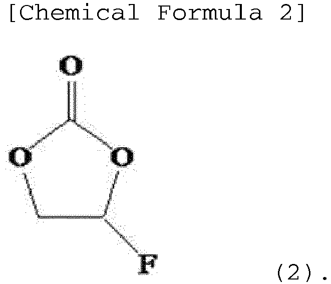

5. The nonaqueous electrolyte secondary battery according to any one of claims 1 to 4, wherein a content of the negative electrode film-forming agent in the electrolyte solution is 0.1 to 30 parts by weight based on 100 parts by weight of the electrolyte solution.

6. The nonaqueous electrolyte secondary battery according to any one of claims 1 to 5, wherein the positive electrode further comprises a component (a) below:
(a) at least one of polycarboxylic acid and a metal salt of polycarboxylic acid.

7. The nonaqueous electrolyte secondary battery according to claim 6, wherein the polycarboxylic acid (a) is at least one selected from the group consisting of polyacrylic acid, polymethacrylic acid, polyvinylbenzoic acid, polyallylbenzoic acid, polymethallylbenzoic acid, polymaleic acid, polyfumaric acid, polyasparaginic acid and polyglutamic acid.

8. The nonaqueous electrolyte secondary battery according to claim 6 or 7, wherein the metal salt of polycarboxylic acid (a) is at least one of an alkali metal salt of polycarboxylic acid and an alkaline-earth metal salt of polycarboxylic acid.

9. A method for producing the nonaqueous electrolyte secondary battery according to any one of claims 1 to 8, the method comprising steps (I) to (III) below:
(I) preparing a positive electrode and a negative electrode, and disposing a separator between the positive electrode and the negative electrode to produce a stacked component including the positive electrode, the separator and the negative electrode;
(II) housing at least one of the stacked component in a battery container; and
(III) pouring an electrolyte solution into the battery container.

## Patentansprüche

1. Sekundärbatterie mit nicht-wässrigem Elektrolyt, umfassend:
eine positive Elektrode;
eine negative Elektrode, wobei die negative Elektrode ein kohlenstoffhaltiges Material enthält, das zur Lithiumionen-Insertion/Desertion fähig ist;
einen Separator, der zwischen der positiven Elektrode und der negativen Elektrode angeordnet ist; und
eine Elektrolytlösung, die ein unterstützendes Salz mit Ionenleitfähigkeit enthält,
**dadurch gekennzeichnet, dass** die positive Elektrode ein elektrisch leitfähiges Polymer enthält, wobei das elektrisch leitfähige Polymer mindestens eines ist, ausgewählt aus der Gruppe bestehend aus Polyanilin, Polyanilinderivaten, Polypyrrol und Polypyrrolderivaten, und
die Elektrolytlösung ein Negativelektrodenfilmbildungsmittel enthält.

2. Sekundärbatterie mit nicht-wässrigem Elektrolyt gemäß Anspruch 1, wobei die Elektrolytlösung Lithiumhexafluorphosphat als ein unterstützendes Salz enthält.

3. Sekundärbatterie mit nicht-wässrigem Elektrolyt gemäß Anspruch 1 oder 2, wobei die positive Elektrode ferner Stickstoff enthält.

4. Sekundärbatterie mit nicht-wässrigem Elektrolyt gemäß mindestens einem der Ansprüche 1 bis 3, wobei das Negativelektrodenfilmbildungsmittel in der Elektrolytlösung mindestens eines ist aus Vinylencarbonat mit der folgenden Formel (1) und Fluorethylencarbonat mit der folgenden Formel (2) :

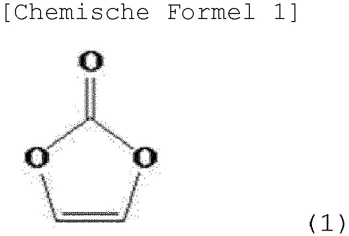

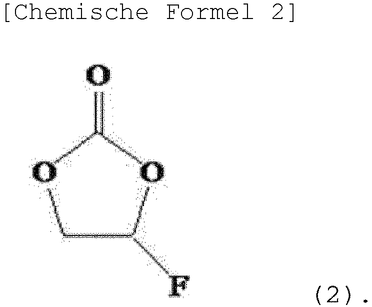

5. Sekundärbatterie mit nicht-wässrigem Elektrolyt gemäß mindestens einem der Ansprüche 1 bis 4, wobei ein Gehalt des Negativelektrodenfilmbildungsmittels in der Elektrolytlösung 0,1 bis 30 Gewichtsteile, bezogen auf 100 Gewichtsteile der Elektrolytlösung, beträgt.

6. Sekundärbatterie mit nicht-wässrigem Elektrolyt gemäß mindestens einem der Ansprüche 1 bis 5, wobei die positive Elektrode ferner die folgende Komponente (a) umfasst:
(a) mindestens einen Vertreter aus Polycarbonsäure und einem Metallsalz der Polycarbonsäure.

7. Sekundärbatterie mit nicht-wässrigem Elektrolyt gemäß Anspruch 6, wobei die Polycarbonsäure (a) mindestens eine ist, ausgewählt aus der Gruppe bestehend aus Polyacrylsäure, Polymethacrylsäure, Polyvinylbenzoesäure, Polyallylbenzoesäure, Polymethallylbenzoesäure, Polymaleinsäure, Polyfumarsäure, Polyasparaginsäure und Polyglutaminsäure.

8. Sekundärbatterie mit nicht-wässrigem Elektrolyt gemäß Anspruch 6 oder 7, wobei das Metallsalz der Polycarbonsäure (a) mindestens eines aus einem Alkalimetallsalz der Polycarbonsäure und einem Erdalkalimetallsalz der Polycarbonsäure ist.

9. Verfahren zur Herstellung der Sekundärbatterie mit nicht-wässrigem Elektrolyt gemäß mindestens einem der Ansprüche 1 bis 8, wobei das Verfahren die folgenden Schritte (I) bis (III) umfasst:
(I) eine positive Elektrode und eine negative Elektrode werden hergestellt und ein Separator wird zwischen der positiven Elektrode und der negativen Elektrode angeordnet und so eine gestapelte Komponente hergestellt, die die positive Elektrode, den Separator und die negative Elektrode einschließt;
(II) mindestens eine gestapelte Komponente wird in einem Batteriebehälter untergebracht; und
(III) eine Elektrolytlösung wird in den Batteriebehälter gefüllt.

## Revendications

1. Batterie secondaire à électrolyte non aqueux comprenant :
une électrode positive ;
une électrode négative, dans laquelle l'électrode négative contient un matériau carboné capable d'une insertion/fuite d'ions lithium ;
un séparateur disposé entre l'électrode positive et l'électrode négative ; et
une solution d'électrolyte contenant un sel de support présentant une conductivité ionique,
**caractérisée en ce que** l'électrode positive contient un polymère électriquement conducteur, le polymère électriquement conducteur étant au moins un sélectionné à partir du groupe constitué de polyaniline, de dérivés de polyaniline, de polypyrrole et de dérivés de polypyrrole et
la solution d'électrolyte contient un agent de formation de film d'électrode négative.

2. Batterie secondaire à électrolyte non aqueux selon la revendication 1, dans laquelle la solution d'électrolyte contient de l'hexafluorophosphate de lithium en tant que sel de support.

3. Batterie secondaire à électrolyte non aqueux selon la revendication 1 ou 2, dans laquelle l'électrode positive contient en outre de l'azote.

4. Batterie secondaire à électrolyte non aqueux selon l'une quelconque des revendications 1 à 3, dans laquelle l'agent de formation de film d'électrode négative dans la solution d'électrolyte est au moins un parmi du carbonate de vinylène représenté par la formule (1) ci-dessous et du carbonate de fluoroéthylène représenté par la formule (2) ci-dessous :

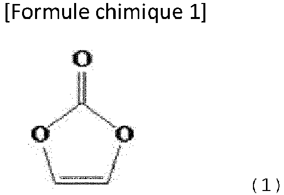

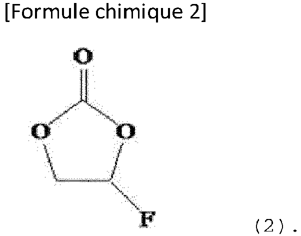

5. Batterie secondaire à électrolyte non aqueux selon l'une quelconque des revendications 1 à 4, dans laquelle une teneur de l'agent de formation de film d'électrode négative dans la solution d'électrolyte est de 0,1 à 30 parts en poids sur la base de 100 parts en poids de la solution d'électrolyte.

6. Batterie secondaire à électrolyte non aqueux selon l'une quelconque des revendications 1 à 5, dans laquelle l'électrode positive comprend en outre un composant (a) ci-dessous :
(a) au moins un parmi de l'acide polycarboxylique et un sel métallique d'acide polycarboxylique.

7. Batterie secondaire à électrolyte non aqueux selon la revendication 6, dans laquelle l'acide polycarboxylique (a) est au moins un sélectionné à partir du groupe constitué d'acide polyacrylique, d'acide polyméthacrylique, d'acide polyvinylbenzoïque, d'acide polyallylbenzoïque, d'acide polyméthallylbenzoïque, d'acide polymaléique, d'acide polyfumarique, d'acide polyasparaginique et d'acide polyglutamique.

8. Batterie secondaire à électrolyte non aqueux selon la revendication 6 ou 7, dans laquelle le sel métallique d'acide polycarboxylique (a) est au moins un parmi un sel métallique alcalin d'acide polycarboxylique et un sel métallique alcalino-terreux d'acide polycarboxylique.

9. Procédé pour produire la batterie secondaire à électrolyte non aqueux selon l'une quelconque des revendications 1 à 8, le procédé comprenant les étapes (I) à (III) ci-dessous :
(I) la préparation d'une électrode positive et d'une électrode négative, et la disposition d'un séparateur entre l'électrode positive et l'électrode négative pour produire un composant empilé incluant l'électrode positive, le séparateur et l'électrode négative ;
(II) le logement d'au moins un du composant empilé dans un contenant de batterie ; et
(III) le versement d'une solution d'électrolyte dans le contenant de batterie.
